# EUROPÄISCHE PATENTANMELDUNG

(11) **EP 2 241 395 A1**
(43) Veröffentlichungstag der Anmeldung: **20.10.2010**
(21) Anmeldenummer: 10159849.8
(22) Anmeldetag: 14.04.2010
(51) Int. Cl.: B23B 29/034, B23B 29/04

(54) **Werkzeughalter**

(30) Priorität: 14.04.2009 CH 5832009
(71) Anmelder: Rego-Fix AG, 4456 Tenniken (CH)
(72) Erfinder: Brönnimann, Martin, 4452 Itingen (CH); Freiner, Werner, 4414 Füllinsdorf (CH)
(74) Vertreter: Braun, André jr.

(57) **Zusammenfassung**

Der Werkzeughalter für Werkzeugmaschinen mit feststehenden Werkzeugen, besitzt einen Zylinderschaft (2) für die Verbindung mit dem Schlitten bzw. Revolver der Werkzeugmaschine und eine Aufnahmebohrung für ein Werkzeug. Er besteht aus einem Basishalter (1) mit dem Zylinderschaft und einem vom Basishalter getrennten und mit ihm passgenau verbindbaren Spannzangenhalter (3) mit einer Aufnahmebohrung für eine Spannzange.

## Beschreibung

Die Erfindung betrifft einen Werkzeughalter für Werkzeugmaschinen mit feststehenden Werkzeugen, mit einem Zylinderschaft für die Verbindung mit dem Schlitten bzw. Revolver der Werkzeugmaschine und mit einer Aufnahmebohrung für ein Werkzeug.

CNC-Drehmaschinen vereinigen die Vorteile aller Universaldrehmaschinen. Sie verfügen oft über eine zusätzliche Hilfsachse, die im Allgemeinen als Drehachse der Arbeitsspindel zugeordnet ist. Jede Vorschubachse verfügt über einen eigenen Motor und ein Wegmesssystem. Der Werkzeugschlitten kann einen drehbaren Werkzeugrevolver aufnehmen und ist von Lünette und Reitstock getrennt geführt, um unabhängig von ihnen zu verfahren. Das Maschinenbett ist meist seitlich um ca. 30 ° geneigt, um eine bessere Späneabfuhr zu ermöglichen. Nur der Planungsaufwand sowie die Kosten bei Einzelanfertigungen einfacher Teile liegen teilweise höher als bei den mechanischen gesteuerten Alternativen.

Sind auf dem Schlitten mehrere Werkzeuge in einer drehbaren Vorrichtung, dem Revolverkopf angebracht, bezeichnet man die Maschine als Revolverdrehmaschine. Der Revolver-Werkzeugschlitten besteht aus Bettschlitten, Planschlitten und Revolverkopf. Bei den Revolverköpfen unterscheidet man, je nach Orientierung der Werkzeugachse, Stern- oder Scheibenrevolver mit senkrechter Achse und Trommelrevolver mit waagerechter Achse.

Zur Bearbeitung der Werkstücke werden die Schneidwerkzeuge (Drehstähle, Bohrer, Reibahlen usw.) mittels Werkzeughaltern am Revolverkopf befestigt.

Die meist verwendeten Werkzeughalter sind in der Norm DIN ISO 10889 umschrieben. Die Schnittstelle dieser Halter zur Aufnahme im Revolver sind sehr ungenau (grosse Toleranzen). Dadurch muss bei einem Schneidwerkzeugwechsel jedes Mal die Schneide neu gerichtet werden (Spitzenhöhe und Horizontalität). In vielen Drehautomaten ist eine Vorrichtung vorgesehen, um diese Voreinstellung vorzunehmen. Während dieser Einstellung für jedes einzelne Werkzeug (z.T. bis zu 30 Werkzeuge auf zwei Revolvern) steht die teure CNC-Drehmaschine. Sobald ein Schneidwerkzeug stumpf ist, muss es wieder gewechselt und damit gerichtet werden. Die Drehmaschine steht erneut.

Werkzeugseitig sind unterschiedliche Spannmöglichkeiten gegeben. Folgende Spannhalter werden eingesetzt: Vierkant Längs-, Quer- und Mehrfachaufnahmen, W2-Halter für Wendeplattenbohrer und Bohrstangenaufnahmen mit Nennbohrung und 2-3 Querschrauben zum Spannen, Morsekegelaufnahmen usw. Beim Richter der Schneide (Spitzenhöhe und Horizontalität) kann es beim Festziehen der Feststellschrauben (Querschrauben) zu Verschiebungen kommen was das genaue Justieren erschwert.

Es sind auch Werkzeughalter bekannt, die mit einer Spannzangenaufnahme versehen sind. Bei diesen ergibt beim Festziehen einer Spannzange in der Spannzangenaufnahme einen Längenversatz, der das Justieren erschwert.

Somit ist die Schnittstelle zwischen Werkzeugaufnahme und Werkzeug ebenfalls eine Ursache für unerwünschte Ausfallzeiten der Maschine.

Der Erfindung liegt die Aufgabe zugrunde, die Nachteile bekannter Werkzeughalter zu beheben und damit einerseits die Ausfallzeiten der Maschinen zu verringern und andererseits das Richten der Werkzeuge zu vereinfachen.

Erfindungsgemäss wird dies dadurch gelöst, dass der Werkzeughalter aus einem Basishalter mit dem Zylinderschaft und einem vom Basishalter getrennten und mit ihm passgenau verbindbaren Spannzangenhalter mit einer Aufnahmebohrung für eine Spannzange besteht.

Erfindungsgemäss wird also vorgeschlagen, eine weitere Schnittstelle einzuführen, durch welche die Schnittstelle zwischen Werkzeughalter und Schlitten bzw. Revolver beim Werkzeugwechsel nicht getrennt werden muss und somit deren Einstellung unverändert bleiben kann und die Schnittstelle zwischen Werkzeughalter und Werkzeug voreingestellt werden kann, so dass beim Werkzeugwechsel keine nennenswerten Ausfallzeiten entstehen. Die zusätzliche Schnittstelle ist mit geringsten Toleranzen ausgeführt, so dass alle Einstellungen exakt erhalten bleiben.

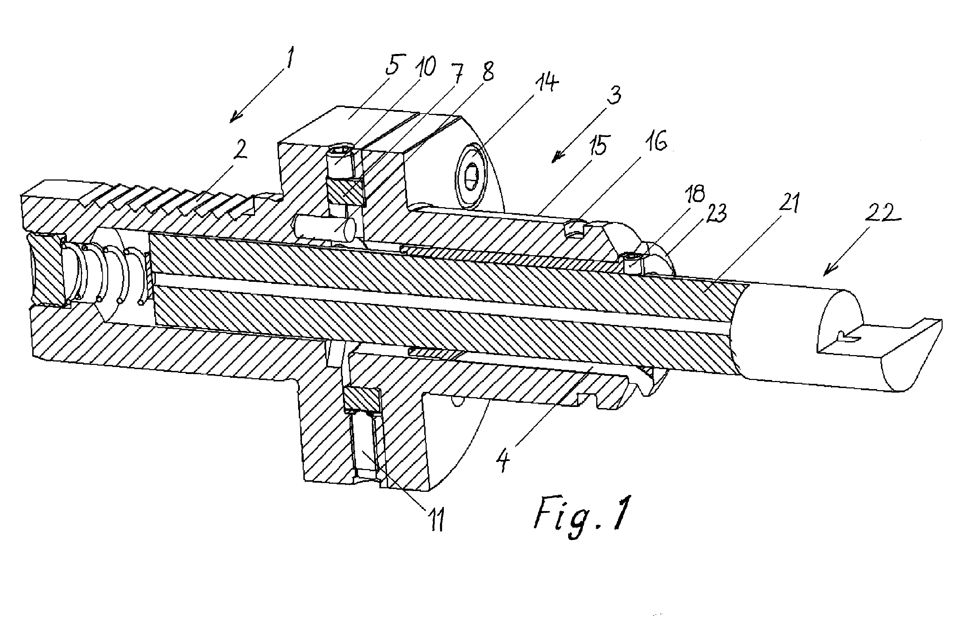

Im Folgenden wird anhand der beiliegenden Zeichnungen ein bevorzugtes Ausführungsbeispiel der Erfindung beschrieben. Es zeigen
- Fig.1: einen zweiteiligen Werkzeughalter mit einge- setztem Drehstahl, teilweise im Schnitt,
- Fig.2: den Werkzeughalter gemäss Fig. 1 mit ge- trennten Teilen,

Der in den Figuren gezeigte Werkzeughalter besteht aus zwei Teilen: einem maschinenseitigen Basishalter (VDI-Halter) 1 mit einem Zylinderschaft 2 zum Einsetzen in eine Aufnahme des Schlittens bzw. Revolvers eines Drehautomaten und einer werkzeugseitigen Spannzangenhalter 3, in welche eine Spannzange 4 eingesetzt werden kann.

Der Basishalter (VDI) weist werkzeugseitig einen Flansch 5 auf, in dessen Stirnseite eine konzentrische Ausnehmung 6 vorgesehen ist. In der Ausnehmung ist ein Justierring 7 angeordnet, dessen Aussendurchmesser geringfügig kleiner ist als der Innendurchmesser der Ausnehmung. Der Justierring wird mit zwei axialen Feststellschrauben 9 in der Ausnehmung gehalten.

Im Flansch sind in radialer Richtung zwei um 90° versetzte Justierschrauben 10 und zwei jeweils um weitere 90° versetzte Kugeldruckstücke 11 angeordnet. Die Justierschrauben drücken auf die Mantelfläche, und die Kugeldruckstücke greifen in eine Quernut ein. Die Quernut verhindert ein Verdrehen des Ringes 7 beim Festziehen des Spannzangenhalters.

Innerhalb des Justierringes ist im Flansch 5 ein axial gerichteter Justierstift 8 angeordnet, der dazu dient, die Werkzeugaufnahme nach der Voreinstellung in einem Basishalter (VDI) zu fixieren. Dadurch wird erreicht, dass die Spitzenhöhe des Werkzeugs nach dem Verschrauben mit dem Basishalter in der Maschine wieder stimmt.

Der Spannzangenhalter ist maschinenseitig mit einem Flansch 12 versehen, der seinerseits an seiner Stirnseite einen vorspringenden Passzylinder 13 aufweist. Der Passzylinder besitzt an der Stelle, die beim Zusammenbau dem Justierstift gegenüber liegt, eine Ausnehmung 24 bis zur Stirnfläche des Flansches 12. Im Flansch sind vier Befestigungsschrauben 14 zum Festziehen am Basishalter vorgesehen. Im Übrigen besteht der Spannzangenhalter aus einem langgestreckten zylindrischen Teil 15 mit einer in der Nähe des werkzeugseitigen Endes angeordneten Ringnut 16 für den Eingriff der Pressbacken eines an sich bekannten Presswerkzeugs und einer zur Maschinenseite hin konisch verengten Aufnahmebohrung 17 zur Aufnahme einer Spannzange 4. Mittels einer radialen Feststellschraube 18 wird eine Bohrstange oder ein Schneidwerkzeug horizontal definiert festgezogen.

Zum Justieren wird zunächst der Basishalter in den Drehmaschinenrevolver gespannt. Danach wird mit der Justiereinrichtung der Drehmaschine der Justierring mit den Justierschrauben 10 gegen den Gegendruck der jeweils gegenüberliegenden Kugeldruckstücke voreingestellt und mit den Feststellschrauben 9 fixiert. Auf diese Weise kann der Ring mit nur zwei Schrauben justiert werden.

Sobald Ring justiert und mit Feststellschrauben befestigt ist, kann der Spannzangenhalter eingesetzt werden. Der Passzylinder positioniert den Spanzangenhalter zentrisch mittels des voreingestellten Justierringes des Basishalters und radial mittels des Justierstifts 8 in der Ausnehmung 24 im Flansch 12.

Der Justierring 7 kann, auch wenn der Spannzangenhalter schon gespannt wurde nachjustiert werden. Dazu müssen die Feststellschrauben 9 des Justierringes durch die zwei Bohrungen im Spanzangenhalterflansch und die vier Befestigungsschrauben 14 des Spannzangenhalters gelöst werden. Danach kann der Justierringe mittels Messvorrichtung des Drehautomaten nachjustiert werden.

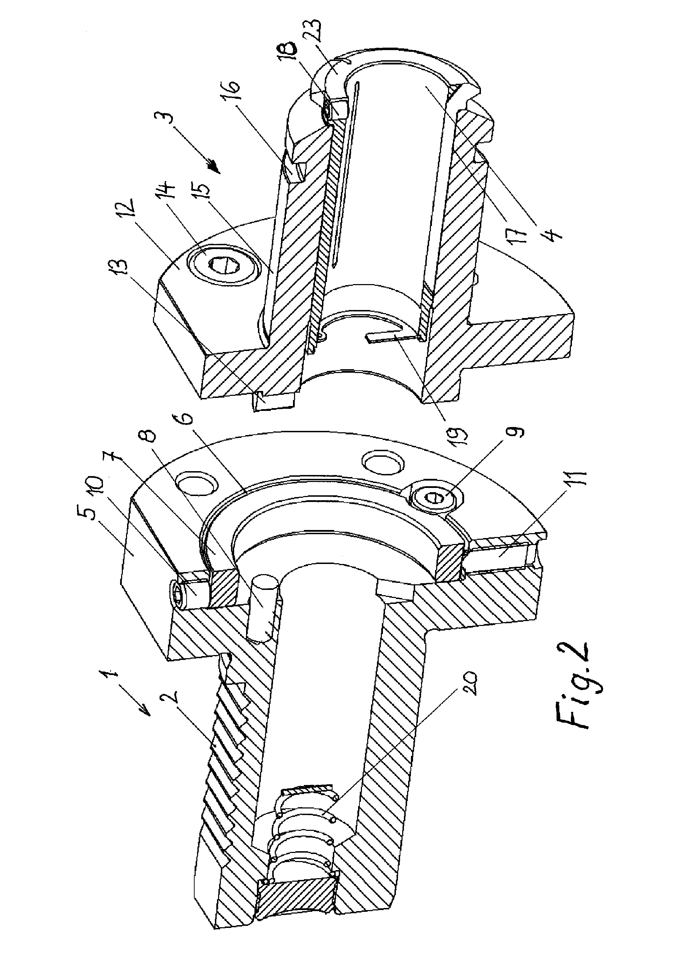

Die in Fig. 2 gezeigte Spannzange ist mit einer Sicherungsplatte 18 mit Öffnungen für ein Kühlmittel versehen, welche verhindert, dass der Schneidwerkzeugschaft beim Einpressvorgang der Spannzange in den Spannzangenhalter auf dem Grund der Sacklochbohrung des Basishalters aufsteht. Dies kann nötig sein beim Verwenden des Spannzangenhalters auf einer anderen Basisvorrichtung ohne Durchgangsbohrung. Bei der in Fig. 2 gezeigten Variante kann die Sicherungsplatte weggelassen werden, da als Sicherheit eine Spiralfeder 19 den Schneidwerkzeugschaft auf Distanz zum Grund der Sacklochbohrung hält.

Die Spannzange 4 besitzt entsprechend dem bekannten Stand der Technik eine zylindrische Bohrung 20 zur Aufnahme eines Schafts 21 eines Werkzeugs 22, beispielsweise eines Drehstahls, und einen Kopf mit einem Flansch 23 für den Ansatz der Pressbacken des Presswerkzeugs. Ihre maschinenseitige Aussenfläche ist entsprechend dem Konuswinkel der Aufnahmebohrung 17 konisch verjüngt.

Als Konuswinkel bzw. Konizität wird in der vorliegenden Beschreibung der Öffnungswinkel des Konus d.h. der Winkel zwischen einander gegenüberliegenden Erzeugenden bzw. Mantellinien der konischen Fläche und ihrer Achse bezeichnet. Dieser Konuswinkel ist bei dem hier beschriebenen Ausführungsbeispiel kleiner als der sog. Selbsthemmungswinkel von ca. 5°, vorzugsweise kleiner als 2°.

Der erfindungsgemässe Werkzeughalter ist nicht auf Ausführungsformen beschränkt, bei denen der Spannzangenhalter koaxial mit dem Basishalter verbunden wird. Für Werkzeughalter, in denen das Werkzeug radial, d.h. mit seiner Achse senkrecht zur Aufnahme im Revolver, im Halter sitzt, ist die erfindungsgemässe Lösung mit einer zusätzlichen Schnittstelle in gleicher Weise einsetzbar.

## Patentansprüche

1. Werkzeughalter für Werkzeugmaschinen mit feststehenden Werkzeugen, mit einem Zylinderschaft für die Verbindung mit dem Schlitten bzw. Revolver der Werkzeugmaschine und mit einer Aufnahmebohrung für ein Werkzeug, **dadurch gekennzeichnet, dass** der Werkzeughalter aus einem Basishalter mit dem Zylinderschaft und einem vom Basishalter getrennten und mit ihm passgenau verbindbaren Spannzangenhalter mit einer Aufnahmebohrung für eine Spannzange besteht.

2. Werkzeughalter nach Anspruch 1, **dadurch gekennzeichnet, dass** der Basishalter mit einem werkzeugseitig angeordneten Flansch zur Verbindung mit dem Spannzangenhalter versehen ist und im Flansch ein mittels radialen Justierschrauben justierbarer Justierring angeordnet ist.

3. Werkzeughalter nach Anspruch 2, **dadurch gekennzeichnet, dass** der Spannzangenhalter mit einem maschinenseitig angeordneten Flansch mit einem Passzylinder für den passgenauen Eingriff in den Justierring versehen ist.

4. Werkzeughalter nach Anspruch 1, **dadurch gekennzeichnet, dass** der Konuswinkel der Spannzangenaufnahme und der Spannzange kleiner als der sog. Selbsthemmungswinkel von ca. 5°, vorzugsweise kleiner als 2°.
